# EUROPEAN PATENT SPECIFICATION

(11) **EP 1 570 614 B1**
(45) Date of publication and mention of the grant of the patent: **26.12.2007**
(21) Application number: 03758027.1
(22) Date of filing: 20.10.2003
(51) Int. Cl.: H04L 12/58

(54) **TEXT-TO-SPEECH STREAMING VIA A NETWORK**
ÜBERTRAGUNG VON TEXT-ZU-SPRACHE DATENSTRÖMEN ÜBER EIN NETZWERK
CONVERSION CONTINUE DE TEXTE EN PAROLE PAR L'INTERMEDIAIRE D'UN RESEAU

(30) Priority: 22.10.2002 EP 02079387
(43) Date of publication of application: 07.09.2005
(73) Proprietor: Koninklijke KPN N.V., 2516 CK The Hague (NL)
(72) Inventor: VRIESEMA, Bastiaan, Antonius, NL-3554 HS Utrecht (NL)
(74) Representative: Wuyts, Koenraad Maria
(86) International application number: PCT/EP2003/011629
(87) International publication number: WO 2004/039020

(56) References cited:
- EP-A- 0 845 894
- WO-A-99/45691
- US-A1- 2001 048 676
- US-B1- 6 343 329

## Description

### FIELD OF THE INVENTION

The present invention relates to a method and a system for converting text messages into streaming audio data, as well for communicating streaming audio data over a network.

### BACKGROUND OF THE INVENTION

Nowadays, there is an increasing need for communicating audio and video data via networks. One of the requirements to be met by network users is the availability of multi-media applications at the user's access equipment. These multi-media applications include audio and video software that is used to play, retrieve, and create audio and video content. Needed as well is multi-media supporting equipment such as sound-cards, audio-cards, microphones and speakers.

One of the developments in recent years with respect to audio applications is the availability of computer based techniques for converting text data into speech. With such techniques, text data is translated to audio information by text-to-speech conversion software. Examples of text-to-speech software include Apple Computer's Speech Manager and Digital Equipment Corporation's DECTalk. A text-to-speech engine generally comprises a text analyzer, a syntax and context analyzer and a synthesis module. Using a text-to-speech engine, users can convert text data into audio data on their own equipment such as a personal computer. Via an output device, such as a loud speaker, the audio content that is contained by the audio data can be heard or interpreted by a human being.

Also well known nowadays are streaming techniques for retrieving audio data. As an example, streaming techniques are used for real-time radio on the Internet. Streaming audio refers to audio being played 'on the fly' as more audio data comes in. In other words, the receiving system, such as a personal computer, does not wait until the entire audio data input is received.

As stated before, a necessity for users intending to create and distribute audio data is the availability of audio supporting equipment such as a microphone and a sound-card, and audio supporting software applications such as a media player. Another necessity is faced when a user intends to share with or communicate to other users audio data over a network. The user should then be acquainted with the steps to be taken for communicating the generated audio data and to send it to other users. This requirement can exclude users with no or relatively basic know-how relating to multi-media applications from sharing audio data with other users. The situation is even more complex for a user if the audio data should be sent to another user, the audio data in association with other information such as but not limited to, an electronic document, a picture or a HTML page.

A possible way to create, post and retrieve audio data is known from United States Patent Application No. US 2002/0056351. According to this known method it is possible to post audio files to a centrally located server, and to associate audio files with documents. However this known method does not include text-to-speech facilities, a user still needs a device such as a personal computer that includes specific hardware and supporting software to create audio data such as a microphone and an audio card. As a consequence, a user should have the appropriate knowledge for using, installing, and configuring this type of hardware. Also, for purposes where it is more appropriate to convert text data, such as an electronic text document, into audio data the known method is not efficacious. This can be the case if a user is a disabled person not able to speak or use his or her voice in a proper way. This can also be the case if a user is in a public place while using an access device in order to send audio data to another user. In the latter case a user may prefer to convert a text message into audio data using a text-to-speech application instead of recording his own voice. Another drawback of the method known from United States Patent Application No. US 2002/0056351 is that it does not comprise the retrieving of streaming audio data by a user.

EP-A-0 845 894 discloses a system providing unified access to stored messages, such as multimedia mail messages, in a united multimedia mailbox through multiple access pathways such as over a telephone network using a telephone and over the internet using a browser. It discloses voicemail access over the telephone network, indicating message number, etc. with the ability to play messages to the telephone user. For text type messages, the system converts the text into speech and plays the speech to the telephone user. It also discloses using a browser to access information about the messages stored and using the browser to download and play the messages via data streaming in the case of a voice or video message, or view the messages in the case of text type messages.

US-B1-6 343 329 discloses that, in a method for communicating information from c-mails which arc intended for a subscriber of a telecommunication network and are filed in an e-mail service, subsequent to the activation of a corresponding service, e-mail messages arriving in the e-mail service for the subscriber arc at least partially converted into speech, forwarded to a voice mail service and loaded there as a spoken message. In a suitable telecommunication system, an e-mail/voice mail converter is provided, which is arranged for the at least partial conversion of e-mail messages into speech and/or speech into digital written form, a control logic being provided for the actuation of the converter by command messages of a subscriber.

US2001/0048676A1 discloses a method and a system for retrieving by a user of a telephony device an audio application attachment to an e-mail message. Via a telephone call that is established between the user and an audio web telephone system the user is able to send a command to the audio web telephone system in order to retrieve an e-mail message from a location that is accessible to the audio web telephone system. The audio application attachment of the e-mail message is passed to an audio browser where it is processed resulting in an audio message. The audio message is then provided to the user via the telephony device.

### AIM OF THE INVENTION

It is an object of the invention to eliminate the drawbacks of the prior art and to provide a method and a system that enables network-users to convert a first type of data into a second type of data without local conversion facilities, and to communicate the second type of data to other network-users where it is received as streaming data.

### SUMMARY OF THE INVENTION

In accordance of this invention, a method, a platform, and software are disclosed for converting a first type of data into a second type of data. The conversion of the first type of data takes place at a remote conversion server connected to a network accessible for a user. For this purpose, the method according to the present invention comprises the steps of:
■ selecting or entering by an originating network-user (17) the first type of data (10),
■ associating an object with the first type of data (10),
■ sending the first type of data (10) via a network (3) to a service platform (5),
■ and thereafter converting the first type of data (10) into the second type of data (15) at the service platform (5).

This step of the method enables users to convert a first type of data, such as text data, into a second type of data, such as audio data or video data, without locally having available conversion facilities. In the case of text data to be converted into audio data, this invention solves the problem in the prior art that audio supporting equipment or text-to-speech facilities should be available locally. The text data can be a text message that is sent by a network user via a network to a server connected to the network. Additionally or optionally, the text data can be a part of an electronic text document or any other alphanumeric source. The network accessible for the user can be the Internet, or any type of public or private network.

The method according to the invention can also include the step to send the second type of data as streaming data to another user via a server connected to the network. In the case of text data being converted into audio data, this means that, together with the remote text-to-speech facilities of the first step, upstream text data is received downstream as streaming audio data. To accomplish this, a user sends the text data and an identification of the addressed user over the network to interacting servers, database and other computer programs connected to the network. The interacting servers, databases and other computer programs process the input received from the user resulting in streaming audio data to be received by the addressed user. An identification code can be used to identify the text data.

The method according to the invention can further include the step to associate the second type of data with a file or any other type of electronic document including, but not limited to, text documents, images and HTML documents. If the second type of data is audio data, it can be associated with a HTML document to help to interpreted what can be seen on the HTML document. If the second type of data is video data, it can be associated with a text document to visualize what can be found in the text document. A file can be selected by a user from a collection of files centrally available at a server connected to the network, or from a collection of files locally available at the access device of the user.

With the functionality of the service platform (5), users are able to create and distribute a certain type of data without having available the required facilities for this locally.

### BRIEF DESCRIPTION OF THE DRAWING FIGURE

The foregoing aspects and many of attendant advantages of this invention will become better understood by reference to the following detailed description, when taken in conjunction with the accompanying drawing, wherein:

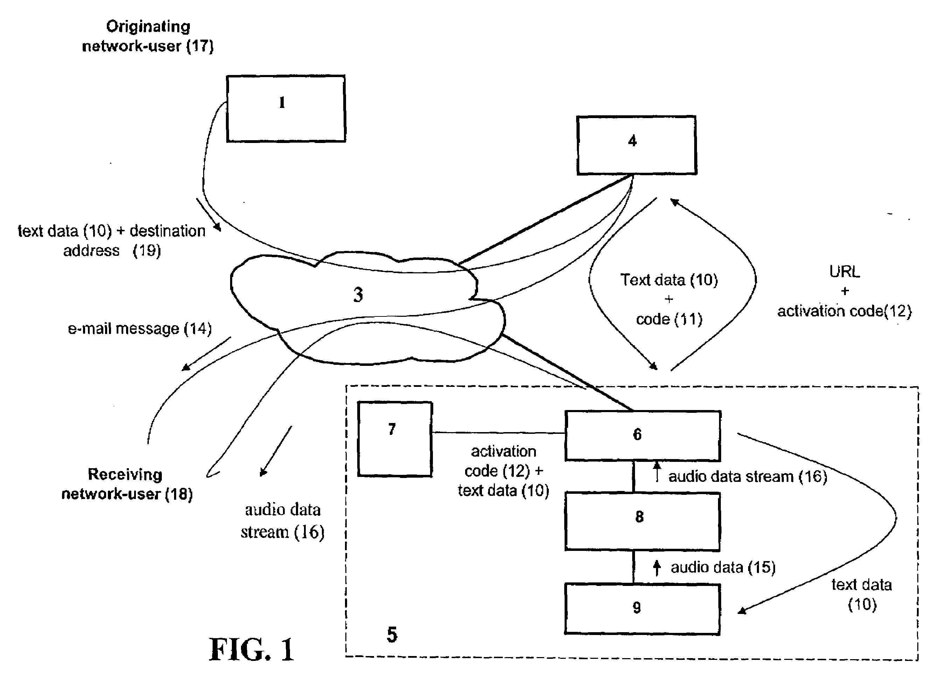

FIG. 1 is a block diagram illustrating the components involved if the first type of data is text data (10) and the second type of data is audio data (15).

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice, the scope of the invention being limited only by the appended claims as finally granted.

FIG.1 shows an embodiment of the invention in the case of converting text data (10) into audio data (15). Referring to FIG. 1 there is a network (3) that connects network-users. The network (3) can be a fixed or mobile network. The network (3) may be a public network, such as the Internet, or a private network. The network may be a non-secure network or a network that is perceived as being non-secure, although secure networks are not excluded in relation to this invention. The network (3) can be facilitated by a service provider, such as an Internet service provider, although network (3) also can be facilitated by an organization operating accessibility to remote sites for specific groups of customers. In the latter case the customer is able to access directly, i.e. without using the Internet, one or more remote locations.

A server (4) is connected to the network (3). There may be many different servers (4), geographically or functionally separated from each other and each managed, controlled and exploited by different parties. The server (4) in the embodiment depicted in FIG.1 is a microprocessor-based system comprising a processing unit and a memory although many other features, facilities and components may be part of the server (4) too. In the memory of the server (4) are one or more application programs stored that execute on the CPU of the server (4). The server (4) can be a system operating under UNIX, NT or any other related operating system. An application residing at the server (4) may be a computer program such as a WWW server, although the present invention does not exclude applications that are not related to Internet technology. As an alternative for being accessible via the Internet, the server (4) can be part of a private domain accessible for a closed user group. In the latter case, the server (4) may be hosting IP based non-IP based applications and information. The server (4) and the applications residing on it may be operated and exploited by an electronic merchant. The server (4) and the service platform (5) may be located at the same physical location.

An originating network-user (17) is connected to the network (3). The originating network user (17) is a user that initiates the process of sending streaming audio data to a receiving network-user (18). The originating network-user (17) uses an originating access device (1) for accessing the network (3). The originating access device (1) is a device for accessing a mobile or fixed network, such as a telephone, a laptop or a personal computer. If the originating access device (1) is a telephone, it preferably is a touch-tone telephone that is able to send and receive short messages (SM's). An IP telephone may be used in connection to the present invention too. Wireless devices are also taken into account with regard to this invention, such as bluetooth supporting devices. The originating access device (1) may also be part of a local area network. Peripheral devices like a modem and a mouse are not shown. The originating access device (1) has limited or in some cases no facilities available for retrieving, playing, recording and sending audio data. Additionally, the originating network-user (17) could have a limited understanding of using or installing multi-media applications and hardware on the originating access device (1). So even if the appropriate multi-media applications and hardware are available on the originating access device (1), the originating network-user (17) may not able to retrieve, record, send are play audio data, because the originating network-user (17) is not familiar with the usage of these multi-media applications and hardware. The physical connection between the originating access device (1) and the network (3) can be through a modem and a telephone, line, a networking device and a leased line, or any types of wireless connection means. The details of the type of connection between the originating access device (1) and the network (3) are of no consequence in the present invention.

Again with reference to Fig. 1 the dashed line relates to the service platform (5). The service platform (5) can be operated and exploited by a service provider. The service platform consists of a number of entities, which are discussed hereafter. The entity where the conversion takes place of the text data (10) into audio data (15) is a TTS (text-to-speech) manager (6), which is a CGI (Common Gateway Interface) program. The TTS manager (6) has access to a storage means (7). A media encoder (8) is connected to the TTS manager (6). The media encoder (8) is an application that generates one or more audio data streams simultaneously based on the input that is received from the TTS server (9). The TTS server (9) comprises software that converts text into audio data (15). The TTS manager (6), the media encoder (8) end the TTS server (9) may be hosted by one physical system or may be each be hosted by a separate physical system. Usually but not necessarily, the service platform (5) is protected against threats originating from the network (3) by means of a fire-wall (not shown).

Referring to Fig. 1 the originating network-user (17) accesses the server (4) via the network (3). If the application on the server (4) is a website, the originating network-user (17) can invoke the TTS service through a HTML hyperlink. Access to the functionality of the TTS platform (5) is provided via a payment mechanism. The payment mechanism can be based upon the usage of a credit card or it can be any other payment mechanism, for instance based on dialing a 0800 telephone number. The originating network-user (17) can construct a text data (10) and send the text data (10) to the server (4). Creating the text data (10) can be done in many different ways. The text data (10) can be created by the originating network-user (17) by using a text editor, an e-mail program, a browser program or, in case the originating access device (1) is a telephone, simply by entering the text data (10) via a user-interface. A destination address (19) to identify the receiving network-user (18) is sent by the originating network-user (17) together with the text data (10) to the server (4). The destination address (19) can be an e-mail address or any type of identification number. The destination address (19) can be sent simultaneously along with the text data (10), or can be sent before or after sending the text data (10).

Optionally or alternatively, the originating network-user (17) can associate an object with the text data (10). The object can be an image according to any type of format, such as but not limited to the JPEG or GIF format. The object can also be a video sequence according to any type of format, streaming or non-streaming, such as MPEG and VIVO. The object can also be an HTML document or any kind of file, including text documents and graphical files. It is emphasized that these examples are provided merely for illustration and not limitation.

After the text data (10) is received by the server (4), the text data (10) will be sent to the TTS manager (6). In an embodiment according to this invention there can be sent a code (11) together with the text data (10) to the TTS manager (6). This code (11) can be used to identify the server (4) that has sent the text data (10). Based on the code (11) accounting can take place between the service provider that operates the service platform (5) and the electronic merchant that operates the server (4).

After receiving the text data (10) and the code (11) the TTS manager (6) performs a validity check on the code (11). If the code (11) is valid, the TTS manager (6) stores the text data (10) in the storage means (7). The TTS manager (6) also generates an activation code (12) that is stored also in the storage means (7). The activation code (12) may be a unique code. The activation code (12) refers to the text data (10) via a link, pointer or any other mechanism to associate the text data (10) with the activation code (12).

The TTS manager (6) sends a reference address, such as a URL (Universal Resource Location), with the activation code (12) as a parameter to an application, such as a web server, at the server (4). The reference address refers to the TTS manager (6), and is used to indicate the location of the TTS manager (6). If the systems described in this disclosure are based on IP related technology, the reference address represents an IP address. Alternatively, the reference address represents some other identification of a network entity or application.

At the server (4) a webpage is being created that contains the reference address to the TTS manager (6). The webpage also contains a media player that can be started by the receiving network-user (18). The server (4) also sends an e-mail message (14) containing another reference address to the receiving network-user (18). The other reference address refers to the webpage being created by the server (4). After receiving the e-mail message (14), the receiving network-user (18) can access the webpage by selecting the reference address (or clicking the URL) received in the e-mail message (14). Having accessed the webpage, the receiving network-user (18) can start the media player resulting in sending the activation code (12) to the TTS manager (6) and consequently activating the TTS manager (6).

After having received the activation code (12), the TTS manager (6) checks the validity of the activation code (12). If the activation code (12) is valid, the TTS manager retrieves the corresponding text data (10) from the storage means (7). The TTS manager (6) sends the text data (10) to a TTS server (9), where the text data (10) is converted into an audio data (15). It is not necessarily to store the audio data (15) in the storage means (7), although in some other embodiments of the present invention it can be possible to store the audio data (15) before being processed by a media encoder (8). Avoiding storing the audio data (15) in the storage means reduces the required memory capacity, and avoids costs relating to the usage of the software residing at the TTS server (9) like license fees. The audio data (15) is sent to the media encoder (8) resulting in an audio data stream (16). The audio data stream (16) can be sent to the receiving network-user (18), where the audio data stream (16) is played using the media player available for the receiving network-user (18). The end of the process can be determined using different techniques, such as the detection of a period of inactivity.

## Claims

1. Method for communicating data from an originating network-user (17) to a receiving network-user (18), comprising the steps of:
- sending text data (10), selected or entered by the originating network-user, to a server (4) that is connected to a network (3);
**characterized by** further comprising the step of:
- sending, by the server (4), the text data (10) to a service platform (5) comprising a text-to-speech manager (6);
- creating, by the server (4), a webpage comprising a reference address to the text-to-speech manager (6) and a media player;
- sending to the receiving network-user (18) a reference address to the webpage;
- accessing the webpage by the receiving network-user (18) by selecting the reference address to the webpage;
- starting the media player by the receiving network-user (18) resulting in activating the text-to-speech manager (6);
- converting the text data (10) into audio or video data (15) at the service platform (5); and
- sending the audio or video data (15) as a data stream (16) to the receiving network-user (18).

2. Method according to claim 1, wherein a code (11) for identifying the server (4) is sent by the server (1) to the service platform (5) together with the text data (10) .

3. Method according to claim 1 or 2, wherein said network (3) is a mobile network.

4. Method according to claim 1, 2 or 3, wherein said service platform (5) and said server (4) are located at the same physical location.

5. Method according to any of the preceding claims, wherein a payment mechanism is used to enable the originating network-user (17) or the receiving network user (18) for using the service platform (5).

6. Method according to any of the preceding claims, wherein said the text data (10) is associated with an electronic file or any type of electronic document

7. Method according to any of the preceding claims, wherein the network (3) to which the originating network-user (17) is connected is not the same as the network (3) to which the receiving network-user (18) is connected.

8. Method according to any of the preceding claims, wherein the originating network-user (17) sends a destination address to the service platform (5).

9. Server (4) facilitating communicating data from an originating network-user (17) to a receiving network-user (18), comprising:
- means for receiving, via a network (3), text data (10) that is selected or entered by the originating network-user;
**characterized by** further comprising:
- means for sending the text data (10) to a service platform (5) comprising a text-to-speech manager (6);
- means for creating a webpage comprising a reference address to the text-to-speech manager (6) and a media player;
- means for sending to the receiving network-user (18) a reference address to the webpage; and
- means for starting the media player when the webpage is accessed by the receiving network-user (18) resulting in activating the text-to-speech manager.

10. Server according to claim 9, wherein a code (11) for identifying the server (4) is sent by the server (4) to the service platform (5) together with the text data (10).

## Patentansprüche

1. Verfahren zur Kommunikation von Daten von einem Benutzer (17) eines abgehenden Netzwerkes zu einem Benutzer (18) eines empfangenden Netzwerkes, umfassend die Schritte von:
- Senden von Text-Daten (10), die durch den Benutzer des abgehenden Netzwerkes ausgewählt oder eingegeben werden, zu einem Server (4), der mit einem Netzwerk (3) verbunden ist; **gekennzeichnet durch** weiterhin umfassend die Schritte von:
- Senden der Text-Daten (10) **durch** den Server (4) zu einer Dienste-Plattform (5), die einen Text-zu-Sprache- Verwalter (6) umfasst;
- Erstellen einer Webseite **durch** den Server (4), die eine Referenz-Adresse zu dem Text-zu-Sprache-Verwalter (6) und ein Medien-Abspielgerät umfasst;
- Senden einer Referenz-Adresse zur Webseite an den Benutzer (18) des empfangenden Netzwerkes;
- Zugreifen auf die Webseite **durch** den Benutzer (18) des empfangenden Netzwerkes **durch** Auswählen der Referenz-Adresse zur Webseite;
- Starten des Medien-Abspielgerätes **durch** den Benutzer (18) des empfangenden Netzwerkes, das in der Aktivierung vom Text-zu-Sprache-Verwalter (6) resultiert;
- Konvertieren der Text-Daten (10) in Audio- oder Video-Daten (15) bei der Dienste-Plattform (5); und
- senden der Audio- oder Video-Daten (15) als ein Datenstrom (16) zum Benutzer (18) des empfangenden Netzwerkes.

2. Verfahren gemäss Anspruch 1, wobei ein Code (11) zur Identifikation des Servers (4) durch den Server (4) zu der Dienste-Plattform (5) zusammen mit den Text-Daten (10) gesendet wird.

3. Verfahren gemäss Anspruch 1 oder 2, wobei besagtes Netzwerk (3) ein mobiles Netzwerk ist.

4. Verfahren gemäss Anspruch 1, 2 oder 3, wobei besagte Dienste-Plattform (5) und besagter Server (4) am gleichen physischen Ort angeordnet sind.

5. Verfahren gemäss einem der vorhergehenden Ansprüche, wobei ein Zahlungs-Mechanismus verwendet wird, um es dem Benutzer (17) des abgehenden Netzwerkes oder dem Benutzer (18) des empfangenden Netzwerkes zu ermöglichen, die Dienste-Plattform (5) zu verwenden.

6. Verfahren gemäss einem der vorhergehenden Ansprüche, wobei besagte Text-Daten (10) einer elektronischen Datei oder einer anderen Art eines elektronischen Dokumentes zugeordnet sind.

7. Verfahren gemäss einem der vorhergehenden Ansprüche, wobei das Netzwerk (3), mit welchem der Benutzer (17) des abgehenden Netzwerkes verbunden ist, nicht das Gleiche ist, wie das Netzwerk (3), mit welchem der Benutzer (18) des empfangenden Netzwerkes verbunden ist.

8. Verfahren gemäss einem der vorhergehenden Ansprüche, wobei der Benutzer (17) des abgehenden Netzwerkes eine ZielAdresse zur Dienste-Plattform (5) sendet.

9. Server (4), der eingerichtet ist, um Daten von einem Benutzer (17) eines abgehenden Netzwerkes zu einem Benutzer (18) eines ankommenden Netzwerkes zu kommunizieren, umfassend:
- Mittel zum Empfangen von Text-Daten (10), welche durch den Benutzer des abgehenden Netzwerkes ausgewählt oder eingegeben werden, über ein Netzwerk (3); **gekennzeichnet durch** weiterhin umfassend:
- Mittel zum Senden von Text-Daten (10) zu einer Dienste-Plattform (5), umfassend einen Text-zu-Sprache-Verwalter (6);
- Mittel zum Erstellen einer Webseite, die eine Referenz-Adresse zum Text-zu-Sprache-Verwalter (6) und ein Medien-Abspielgerät umfasst;
- Mittel zum Senden einer Referenz-Adresse zur Webseite an den Benutzer (18) des empfangenden Netzwerkes; und
- Mittel zum Starten des Medien-Abspielgerätes, wenn auf die Webseite **durch** den Benutzer (18) des empfangenden Netzwerkes zugegriffen wird, was in einer Aktivierung des Text-zu-Sprache-Verwalters (6) resultiert.

10. Server gemäss Anspruch 9, wobei ein Code (11) zur Identifikation des Servers (4) an die Dienste-Plattform (5) zusammen mit den Text-Daten (10) durch den Server (4) gesendet wird.

## Revendications

1. Procédé pour communiquer des données depuis un utilisateur en réseau émetteur (17) vers un utilisateur en réseau récepteur (18), comprenant les étapes consistant à :
- envoyer des données de texte (10), sélectionnées ou entrées par l'utilisateur en réseau émetteur, vers un serveur (4) qui est connecté à un réseau (3) ;
**caractérisé en ce qu'**il comprend également les étapes consistant à :
- faire envoyer, par le serveur (4), les données de texte (10) à une plate-forme de services (5) comprenant un gestionnaire texte vers parole (6);
- faire créer, par le serveur (4), une page web comprenant une adresse de référence du gestionnaire texte vers parole (6) et un lecteur de média ;
- envoyer à l'utilisateur en réseau récepteur (18) une adresse de référence de la page web ;
- faire accéder l'utilisateur en réseau récepteur (18) à la page web en sélectionnant l'adresse de référence de la page web ;
- faire lancer le lecteur de média par l'utilisateur en réseau récepteur (18), avec pour résultat l'activation du gestionnaire texte vers parole (6) ;
- convertir les données de texte (10) en données audio ou vidéo (15) au niveau de la plate-forme de services (5) ; et
- envoyer les données audio ou vidéo (15) en tant que flux de données (16) à l'utilisateur en réseau récepteur (18).

2. Procédé selon la revendication 1, dans lequel un code (11) pour identifier le serveur (4) est envoyé par le serveur (4) à la plate-forme de services (5) en même temps que les données de texte (10).

3. Procédé selon la revendication 1 ou 2, dans lequel ledit réseau (3) est un réseau mobile.

4. Procédé selon la revendication 1, 2 ou 3, dans lequel ladite plate-forme de services (5) et ledit serveur (4) sont situés au même emplacement physique.

5. Procédé selon l'une quelconque des revendications précédentes, dans lequel un mécanisme de paiement est utilisé pour autoriser l'utilisateur en réseau émetteur (17) ou l'utilisateur en réseau récepteur (18) à utiliser la plate-forme de services (5).

6. Procédé selon l'une quelconque des revendications précédentes, dans lequel lesdites données de texte (10) sont associées à un fichier électronique ou à n'importe quel type de document électronique.

7. Procédé selon l'une quelconque des revendications précédentes, dans lequel le réseau (3) auquel l'utilisateur en réseau émetteur (17) est connecté n'est pas le même que le réseau (3) auquel l'utilisateur en réseau récepteur (18) est connecté.

8. Procédé selon l'une quelconque des revendications précédentes, dans lequel l'utilisateur en réseau émetteur (17) envoie une adresse de destination à la plate-forme de services (5).

9. Serveur (4) permettant la communication de données depuis un utilisateur en réseau émetteur (17) vers un utilisateur en réseau récepteur (18), comprenant :
- un moyen pour recevoir, par l'intermédiaire d'un réseau (3), des données de texte (10) qui sont sélectionnées ou entrées par l'utilisateur en réseau émetteur ;
**caractérisé en ce qu'il** comprend également :
- un moyen pour envoyer les données de texte (10) à une plate-forme de services (5) comprenant un gestionnaire texte vers parole (6) ;
- un moyen pour créer une page web comprenant une adresse de référence du gestionnaire texte vers parole (6) et un lecteur de média ;
- un moyen pour envoyer à l'utilisateur en réseau récepteur (18) une adresse de référence de la page web ; et
- un moyen pour lancer le lecteur de média lorsque l'utilisateur en réseau récepteur (18) accède à la page web, avec pour résultat l'activation du gestionnaire texte vers parole (6).

10. Serveur selon la revendication 9, dans lequel un code (11) servant à identifier le serveur (4) est envoyé par le serveur (4) à la plate-forme de services (5) en même temps que les données de texte (10).
